# EUROPÄISCHE PATENTSCHRIFT

(11) **EP 3 298 316 B1**
(45) Veröffentlichungstag und Bekanntmachung des Hinweises auf die Patenterteilung: **01.05.2019**
(21) Anmeldenummer: 16722885.7
(22) Anmeldetag: 13.05.2016
(51) Int. Cl.: F16L 47/03, B29C 65/34, F16L 47/14

(54) **FLANSCHVERBINDUNG FÜR BAUTEILE AUS KUNSTSTOFF, INSBESONDERE FÜR ROHRFÖRMIGE BAUTEILE AUS KUNSTSTOFF**
FLANGE CONNECTION FOR COMPONENTS COMPOSED OF PLASTIC, IN PARTICULAR FOR TUBULAR COMPONENTS COMPOSED OF PLASTIC
RACCORD À BRIDES POUR ÉLÉMENTS EN MATIÈRE PLASTIQUE, EN PARTICULIER POUR ÉLÉMENTS TUBULAIRES EN MATIÈRE PLASTIQUE

(30) Priorität: 21.05.2015 DE 102015108083
(43) Veröffentlichungstag der Anmeldung: 28.03.2018
(73) Patentinhaber: egeplast international GmbH, 48268 Greven (DE)
(72) Erfinder: STRANZ, Michael, 49086 Osnabrück (DE)
(74) Vertreter: Fritz, Edmund Lothar
(86) Internationale Anmeldenummer: PCT/EP2016/060824
(87) Internationale Veröffentlichungsnummer: WO 2016/184801

(56) Entgegenhaltungen:
- GB-A- 986 882
- US-A- 2 992 838
- US-A1- 2003 075 919
- US-B1- 6 398 264

## Beschreibung

Die vorliegende Erfindung betrifft eine Flanschverbindung für Bauteile aus Kunststoff, insbesondere für rohrförmige Bauteile aus Kunststoff, umfassend wenigstens ein erstes Bauteil mit einem ersten Rohrabschnitt und einem ersten Flansch sowie wenigstens ein zweites Bauteil mit einem zweiten Rohrabschnitt und einem zweiten Flansch, wobei der erste Flansch und der zweite Flansch mittels wenigstens einer mechanischen Verbindung in axialer Richtung gegeneinander verspannbar sind, wobei zusätzlich zu der mechanischen Verbindung im Bereich aneinander liegender Stirnflächen der beiden Bauteile Mittel zum Verbinden der Bauteile durch elektrisches Verschweißen vorgesehen sind.

Grundsätzlich sind stoffschlüssige Verbindungstechniken in der Kunststoffrohrbranche bekannt, wobei für die Herstellung von Verbindungen im Kunststoffrohrbau vorwiegend als Schweißtechniken das Heizelementstumpfschweißen und das Heizwendelschweißen (Muffenschweißen) eingesetzt werden. Beide genannten Verfahren führen zu einer nicht lösbaren Verbindung. Im Falle einer Rohrverbindung muss die Schweißnaht alle äußeren Kräfte/Spannungen aufnehmen, damit die Verbindung nicht getrennt wird und gleichzeitig muss die Schweißnaht als Dichtung gegen Innendruck fungieren.

Für form- und kraftschlüssige Verbindungstechniken werden in der Kunststoffrohrbranche neben mechanischen Pressverbindern insbesondere Flansche verwendet, beispielsweise ausgeführt als Losflansch mit Vorschweißbund (zweistückig) oder Festflansch (einstückiges Bauteil). Zum einschlägigen Stand der Technik in diesem Bereich seien hier beispielsweise die Schriften DE 10 2006 049 594 A1, DE 196 07 898 A1, US2003/0075919 A1 oder DE 20 2014 002608 U1 genannt.

Kennzeichnend für diese beiden mechanischen Verfahren ist eine lösbare Verbindung.

Im Falle einer mechanischen Verbindung mittels Flansch müssen die Verschraubungen alle äußeren Kräfte/Spannungen aufnehmen, damit die Verbindung nicht getrennt wird, und eine dichte Verbindung erzielt wird, die dem Innendruck standhält.

Bei den aus dem Stand der Technik bekannten Schweißverfahren sind die nachfolgend genannten Aspekte nachteilig:
Rohre aus Polyolefinen, beispielsweise Polyethylen, müssen vor dem Schweißen mit erheblichem Aufwand durch Hobeln oder Schälen der zu schweißenden Flächen vorbereitet werden. Die zu schweißenden Flächen müssen generell sauber, frei von Kratzern oder anderen Beschädigungen sein. Durchmesser-Toleranzen und Ovalitäten der Rohre müssen ausgeglichen werden, so dass die Rohre mit Hilfe von Spannklemmen gerundet werden, bevor sie verschweißt werden können. Insbesondere bei großen Rohren ergeben sich lange Schweiß-und Abkühlzeiten, bevor mit der eigentlichen Rohrverlegung nach dem Verbinden begonnen werden kann. Generell können nur zwei Fügepartner miteinander stoffschlüssig verschweißt werden, wenn die Werkstoffe beider Partner kompatibel sind.

Vorteilhaft ist hingegen, dass geschweißte Verbindungen zugfest und dauerhaft dicht sind auch unter Biegebelastungen und hohen Innendruckbelastungen. Unter fortwährend anliegenden Spannungen (Zug, Druck, Biegespannungen) kommt es nicht zu lokalen Kriechvorgängen in der Schweißnaht, sondern die Bauteile und die Schweißnaht verformen sich gleichermaßen mit der Zeit. So spielen Undichtigkeiten und Leckagen auch bei langen Betriebszeiten keine Rolle.

Bei herkömmlicher mechanischer Verbindungstechnik sind folgende Punkte vorteilhaft:
Die Dichtflächen bei einer Flanschverbindung sind herstellbedingt sehr eng toleriert (Drehen und Fräsen).Die Vorbereitung der Dichtflächen vor dem Verbinden der Bauteile ist gering.

Nach der Installation der Flanschverbindung mittels Verschrauben der beiden Flanschblätter ist die Verbindung direkt belastbar (Abkühlzeiten wie beim Schweißen müssen nicht abgewartet werden).

Zur Installation der Flansche sind nur wenige Hilfsmittel erforderlich und vor allem kein schweres Gerät wie beispielsweise beim Stumpfschweißen.

Durch das mechanische Verbinden durch Klemmen bzw. Schrauben können auch unterschiedliche Werkstoffe miteinander verbunden werden.

Nachteilig ist hingegen bei herkömmlicher mechanischer Verbindungstechnik:
Der größte Nachteil der Flanschverbindung ist die nachlassende Flächenpresskraft im Bereich der Dichtfläche. Dies führt oft dazu, dass die Verschraubungen der Flanschblätter in Intervallen nachgezogen werden müssen. Dies ist ein Resultat der Kriechvorgänge im Dichtungsmaterial (insbesondere bei Kunststoffdichtungen) oder auch dem Flanschmaterial, wenn dieser komplett aus Kunststoffen ausgearbeitet ist.

Bedingt durch die Geometrie der Flansche führen Querkräfte (durch unsachgemäßen Verbau, Setzungen in der Erde etc.) auf die Flanschblätter zu zusätzlichen Spannungen im Bereich der Dichtfläche.)

Die DE 10 2006 049 594 A1 beschreibt den aktuellen Stand der Technik und die Probleme, die bei der Verbindung von Kunststoffrohren mittels Flanschen auftreten im Detail.

Aus der US 6,840,545 B2 ist eine Flanschverbindung für Bauteile aus Kunststoff mit den Merkmalen der eingangs genannten Gattung bekannt, bei der als Heizelement eine ringförmige Scheibe in der Fügezone dient, die zwischen den miteinander zu verbindenden stirnseitigen Flächen der beiden Bauteile angeordnet wird und nach Abschluss des Schweißvorgangs nicht entfernt wird, sondern in der Fügeverbindung verbleibt. Bei dieser ringförmigen Schweißscheibe handelt es sich um ein loses zusätzliches Bauteil, welches auf der Baustelle händisch zwischen den zu fügenden Stirnenden der zu verbindenden Bauteile aus Kunststoff zu positionieren ist. Hieraus ergibt sich das Problem, dass es vorkommen kann, dass bei der Herstellung der Schweißverbindung die ringförmige Schweißscheibe nicht zentrisch eingebracht wird oder beim Verspannen verrutscht, so dass die Schweißung mangelhaft ausgeführt wird oder sogar, falls der Schweißring zu weit nach außen rutscht, gar nicht ausgeführt werden kann. Der Schweißring selbst ist hier kein integriertes Bauteil. Somit wird vorausgesetzt, dass die Stirnenden beider zu verschweißender Bauteile, die die Fügefläche bilden, sehr gut toleriert sind, planparallel oder nur mit geringem Versatz ausgerichtet sind. Es werden in dieser Druckschrift keine Mittel für eine passgenaue Zentrierung vorgeschlagen. Es bleibt daher bei dieser bekannten Lösung die Gefahr, dass es durch bauseitige Einflüsse/Fehlerquellen zu einer fehlerhaften Bedienung kommt.

Weiterhin verbleibt der Schweißring nach Ablauf des Schweißvorgangs als Fremdkörper in der Fügezone, so dass zum einen die richtige Dimensionierung und auch die Auswahl des richtigen Materials für den Schweißring kritisch sind. Bei einer der in diesem Dokument beschriebenen Varianten wird die Schweißscheibe als Lochscheibe ausgeführt oder hat einen siebartigen Aufbau, wodurch es zu Lufteinschlüssen und Lunkern in der Fügezone kommt, wodurch die Belastbarkeit der Schweißverbindung erheblich schlechter wird.

In der US 6,840,545 B2 wird weiterhin vorgeschlagen, in Stahlrohre mittels Relining Kunststoffschläuche einzubringen und diese dann zu verschweißen. Dies hat jedoch den Nachteil, dass das Grundrohr aus Stahl und der die Fügefläche bildende Schlauch innerhalb der Verbindung (des Flansches) keine werkstoffhomogene, stoffschlüssige Verbindung eingehen können. Die Qualität der Schweißung hängt auch hier stark von der Sorgfalt der Bauausführung ab, d.h. die zentrische Einbringung des Liner-Schlauchs, etwaige Wanddickenunterschiede, Ovalitäten des Schlauchs etc. haben einen Einfluss auf die Qualität der Schweißung.

Die Aufgabe der vorliegenden Erfindung besteht darin, eine dauerhaft sichere und zuverlässige Flanschverbindung für Bauteile aus Kunststoff der eingangs genannten Gattung zur Verfügung zu stellen, bei der die Nachteile der vorgenannten bekannten Verbindungstechniken nicht auftreten.

Die Lösung dieser Aufgabe liefert eine Flanschverbindung für Bauteile aus Kunststoff der eingangs genannten Gattung mit den Merkmalen des Hauptanspruchs.

Erfindungsgemäß ist als Mittel zum elektrischen Verschweißen in wenigstens einem Teilbereich einer der Stirnflächen wenigstens eines der beiden Bauteile wenigstens eine Heizwendel angeordnet und die beiden einander zugewandten Stirnflächen der beiden Bauteile werden unmittelbar ohne Zwischenschaltung weiterer Bauelemente miteinander verschweißt *wobei die Bauteile in Teilbereichen, die nicht miteinander verschweißt werden, aus unterschiedlichen, schweißtechnisch nicht miteinander kompatiblen Werkstoffen bestehen.*

Die zusätzlich zu der mechanischen Verbindung im Bereich aneinander liegender Stirnflächen der beiden Bauteile vorgesehene Verbindung der Bauteile durch elektrisches Verschweißen erfolgt somit durch direktes Verschweißen der Stirnseiten der Bauteile, die über die eingebrachte Heizwendel auf die vorgesehene Schweißtemperatur erwärmt werden. Die Verbindungsbereiche (Flansche) bilden mit den jeweils angebundenen Bauteilen (beispielsweise Rohren) eine feste und stoffschlüssige Einheit, ein System.

Bei der erfindungsgemäß verwendeten Heizwendel handelt es sich um einen Widerstandsdraht/Schweißdraht, der mindestens teilweise oder vollständig in das Grundmaterial, d.h. den Kunststoff im Bereich der zu verschweißenden Stirnfläche mindestens eines der zu verbindenden Bauteile eingebettet ist. Dies verhindert die Bildung von Lunkern und Luftblasen in der Fügezone und sorgt für eine jederzeit fixe zentrische Position und Passung der Bauteile, so dass eine definierte Schweißung erfolgen kann.

Kern der Erfindung ist es eine Flanschverbindung (mindestens zweistückig) zu kreieren, welche gewisse Merkmale einer mechanischen Flanschverbindung übernimmt, jedoch durch Kombination mit den Vorteilen einer Schweißverbindung eine neuartige Verbindung darstellt:
Durch eine Kombination von mechanischer Verschraubung (wie beim Flansch) und Schweißen mittels Heizwendel im Bereich der Dichtfläche kann eine dauerhaft mediendichte, zugfeste und querkraftunempfindliche Verbindung geschaffen werden, die leicht zu installieren ist. Zudem kann so eine Verbindung von Bauteilen aus unterschiedlichen Werkstoffen/Kunststoffen geschaffen werden, die sich sonst mittels der herkömmlichen Verfahren im Bereich der Dichtfläche nicht stoffschlüssig verbinden lassen.

Je nach Lastfallkombination und Anwendung (große oder kleine äußere Lasten, hoher oder niedriger Innendruck) kann bei dem erfindungsmäßen Hybrid-Verbindungselement die Verschraubung oder die geschweißte Dichtfläche so ausgelegt werden, dass jeder Teil der Verbindung den gleichen Anteil der Lasten trägt. Es ist aber auch möglich die Konstruktion so auszulegen, dass z.B. alle Zug- und Axiallasten durch die Verschraubung aufgenommen werden und die Schweißnaht alle Innendruck- und Querlasten trägt. So wird es möglich, "schlanke" und weniger massive Konstruktionen zu realisieren, so dass die Installation erleichtert wird.

Da die erfindungsgemäßen Bauteile für die Flanschverbindung beispielsweise mittels spanender Bearbeitung hergestellt werden können, kann die Dichtfläche so sauber und eng toleriert ausgearbeitet werden, dass sehr passgenaue Dichtflächen entstehen, die zur Herstellung der Verbindung durch den Monteur nicht mehr nachbearbeitet werden müssen.

Die Verschraubung des Verbindungselementes kann gleichzeitig als Montagehilfe dienen, so dass die zu verbindenden Bauteile sauber ausgerichtet werden und auch während der Schweißung der Dichtflächen fixiert bleiben. Es resultiert eine gute stoffschlüssige Verbindung im Bereich der Dichtfläche.

Die Verschraubung dient gleichzeitig zum Aufbringen des notwendigen Schweißdruckes im Bereich der Dichtfläche und kann sogar durch Vorgabe der Anzugsmomente der Verschraubungen gezielt (regelwerkskonform) einjustiert werden.

Gemäß einer bevorzugten Weiterbildung der vorliegenden Erfindung ist vorgesehen, dass die mechanische Verbindung eine Flanschverschraubung umfasst oder eine klemmende Verbindung über Bügel, Klemmen, Klammern oder Zwingen.

Vorzugsweise ist als Mittel zum elektrischen Verschweißen in wenigstens einem Teilbereich einer der Stirnflächen wenigstens eines der beiden Bauteile wenigstens eine Heizwendel angeordnet. Jedoch können auch beide Bauteile jeweils im Bereich ihrer Stirnflächen eine oder mehrere Heizwendel aufweisen.

Weiterhin kann gemäß einer möglichen Variante der Erfindung im Bereich der stirnseitigen Enden der miteinander zu verbindenden Bauteile wenigstens eine Nut- und Feder-Verbindung vorgesehen sein. In diesem Fall kann zum Beispiel wenigstens eine Heizwendel an wenigstens einem der miteinander zu verbindenden Bauteile im Bereich der Nut- und Feder-Verbindung angeordnet sein.

Bei der vorgenannten Lösungsvariante bestehen wiederum verschiedene alternative Möglichkeiten für die Anordnung einer oder mehrerer Heizwendel. Zum Beispiel kann wenigstens eine Heizwendel im Bereich einer stirnseitigen ringförmigen Endfläche einer Nut oder eines Rücksprungs oder einer stirnseitigen ringförmigen Endfläche einer Feder oder eines Vorsprungs oder im Bereich einer ringförmigen inneren Umfangsfläche einer Nut oder eines Rücksprungs oder im Bereich einer ringförmigen äußeren Umfangsfläche einer Feder oder eines Vorsprungs angeordnet sein, wobei auch beliebige Kombinationen der vorgenannten Varianten in Betracht kommen, wenn mehr als eine Heizwendel vorgesehen ist.

Der Heizwendeldraht in der geschweißten Fläche kann gegebenenfalls gemäß einer Weiterbildung der Erfindung zur Überwachung der Dichtigkeit im Betrieb genutzt werden (Widerstandsmessung mit Alarm, wenn Flüssigkeit in die Dichtfläche eindringt und sich der Widerstand ändert).

Der Heizwendeldraht (die metallische Komponente) kann weiterhin gemäß einer Weiterbildung der Erfindung genutzt werden, um nach vollzogener Schweißung eine zerstörungsfreie Prüfung und Abnahme der Verbindung durchzuführen beispielsweise mittels (3-D)-Ultraschall, Röntgenstrahlung oder dergleichen.

Im Rahmen der vorliegenden Erfindung können verschiedenste Bauteile aus Kunststoff, insbesondere mindestens abschnittsweise rohrförmige Bauteile aus Kunststoff miteinander verbunden werden. Bevorzugt umfasst wenigstens eines der Bauteile einen geraden Rohrleitungsabschnitt oder wenigstens eines der Bauteile umfasst einen Rohrbogen, ein T-Stück, ein Abzweigstück, ein Reduzierstück oder eine Muffe.

Besonders vorteilhaft ist auch, dass die Bauteile in solchen Teilbereichen, die nicht miteinander verschweißt werden, aus unterschiedlichen, schweißtechnisch nicht miteinander kompatiblen Werkstoffen bestehen können. Das heißt, es lassen sich Bauteile herstellen, die in verschiedenen Teilbereichen jeweils aus unterschiedlichen Kunststoffen bestehen können, wie zum Beispiel Polyethylen einerseits und Polyamid andererseits. Die Herstellung solcher Bauteile ist zum Beispiel möglich im Zwei-Komponenten-Spritzguss, das heißt ein erster Teilbereich wird aus dem einen Werkstoff gespritzt und ein zweiter Teilbereich entsteht dann durch Umspritzen oder Anspritzen an das vorhandene Bauteil unter Verwendung eines zweiten Werkstoffs. Stellt man Teilbereiche von miteinander zu verbindenden Bauteilen im Bereich des Flansches aus den jeweils gleichen Werkstoffen her, dann kann hier eine Schweißverbindung erfolgen, wenngleich diese Bauteile in übrigen Teilbereichen aus jeweils unterschiedlichen Werkstoffen bestehen. Mit anderen Worten, es gelingt auf diese Weise, Rohrbauteile aus unterschiedlichen Kunststoffen, die nicht schweiß-kompatibel sind, schweißtechnisch miteinander zu verbinden, indem man nur Teilbereiche dieser Bauteile aus den jeweils identischen Werkstoffen herstellt und in diesen Teilbereichen (in der Regel ist dies im Bereich der Flansche) eine Schweißverbindung vornimmt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Darstellung eines Längsschnitts durch eine Flanschverbindung gemäß einer beispielhaften Ausführungsform der vorliegenden Erfindung;
Figur 2 einen vergrößerten Detailausschnitt II aus der Darstellung von Figur 1;
Figur 3 a eine perspektivische Ansicht eines der Bauteile für eine erfindungsgemäße Flanschverbindung;

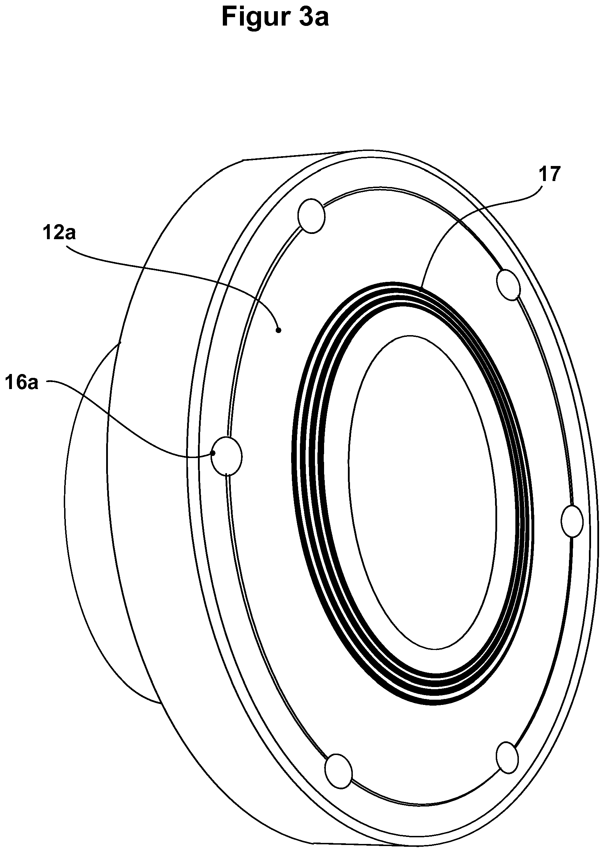

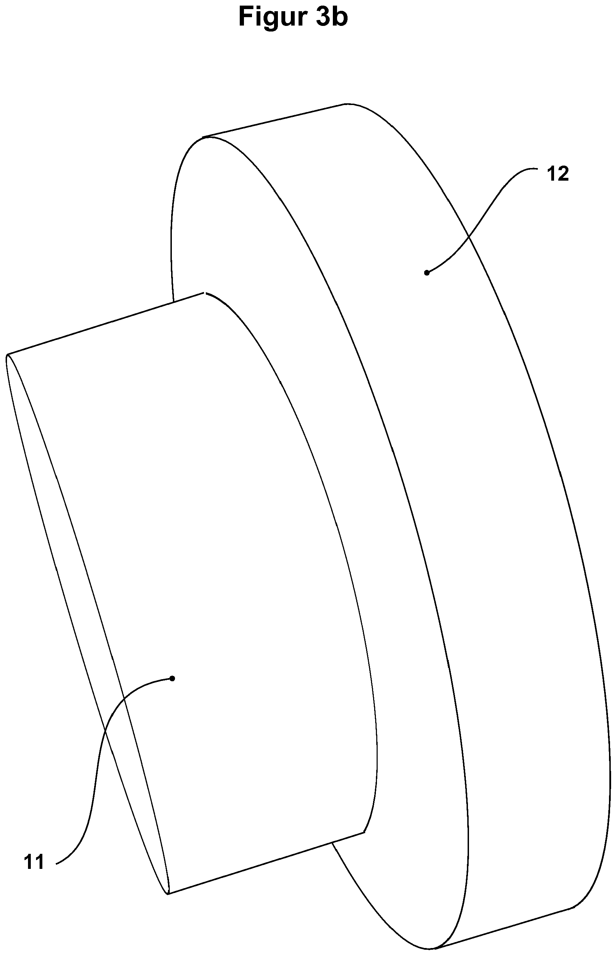

Figur 3 b eine weitere perspektivische Ansicht des Bauteils von Figur 3 a aus einer anderen Perspektive gesehen, bei der man auf den Rohrstutzen schaut;

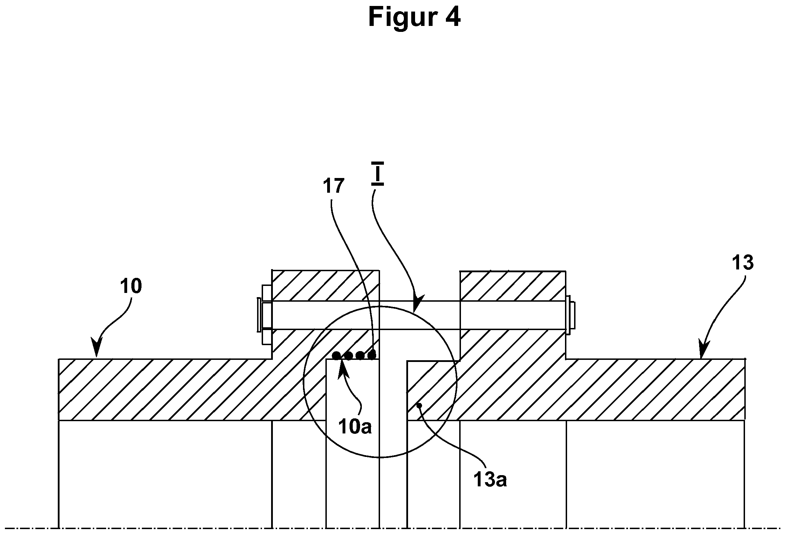

Figur 4 eine Längsschnittansicht durch eine Flanschverbindung gemäß einer alternativen Variante der vorliegenden Erfindung;

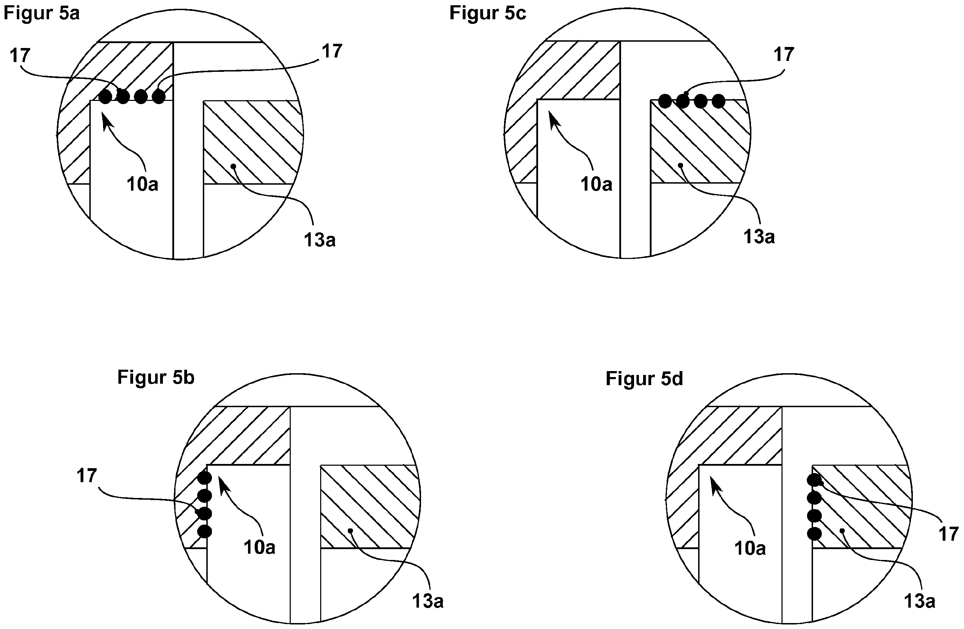

Figuren 5 a, 5 b, 5 c, 5 d jeweils schematisch vereinfachte Darstellungen von Detailausschnitten V aus Figur 4 mit verschiedenen alternativen Varianten der Anordnung der Heizwendel bei einer Flanschverbindung gemäß Figur 4;

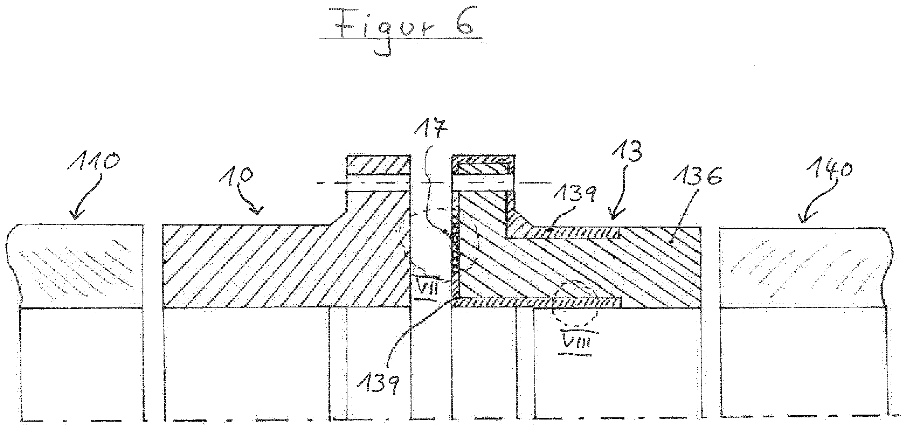

Figur 6 eine schematisch vereinfachte Längsschnittdarstellung einer Flanschverbindung gemäß einer weiteren alternativen Variante der vorliegenden Erfindung;

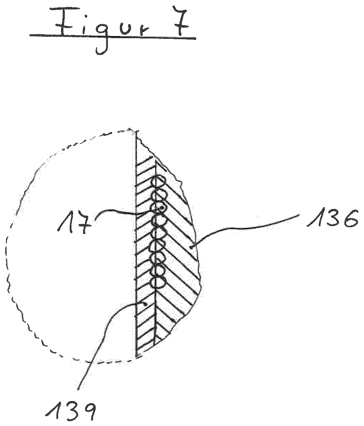

Figur 7 einen Detailausschnitt aus der Darstellung von Figur 6 im vergrößertem Maßstab;

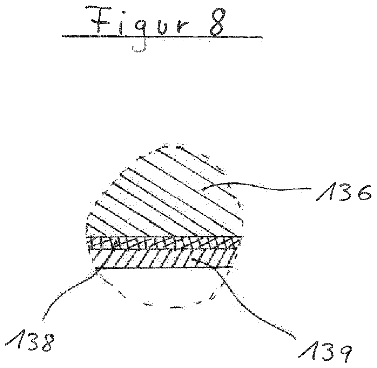

Figur 8 einen weiteren Detailausschnitt aus der Darstellung von Figur 6 in vergrößertem Maßstab.

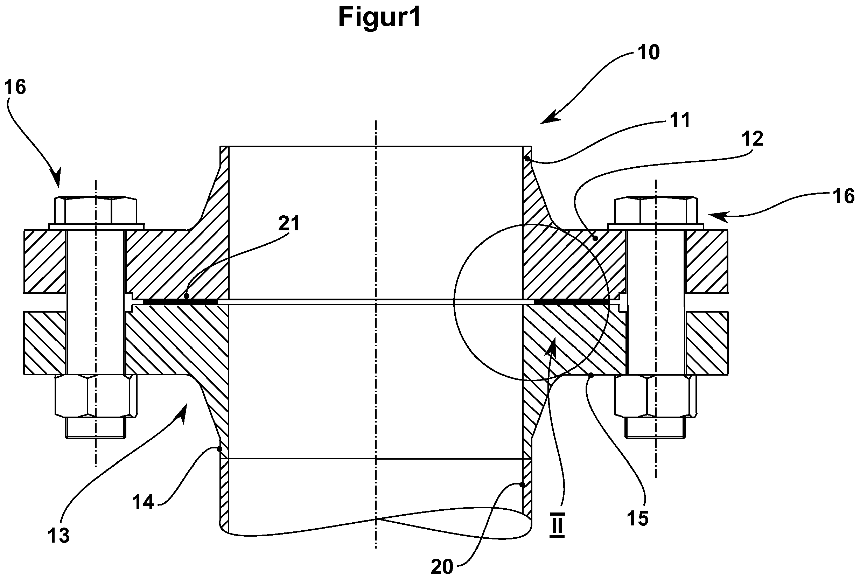

Zunächst wird auf die Figur 1 Bezug genommen. Diese zeigt in schematisch vereinfachter Darstellung einen Längsschnitt durch eine beispielhafte erfindungsgemäße Flanschverbindung. Diese Flanschverbindung umfasst zwei Bauteile aus Kunststoff, die miteinander verbunden werden in einer kombinierten Schraubverbindung/Schweißverbindung, die in der vorliegenden Anmeldung auch als Hybrid-Verbindung bezeichnet wird. Das erste Bauteil 10 umfasst einen Rohrstutzen 11 oder Rohrabschnitt und einen den Rohrstutzen 11 konzentrisch ringförmig umgebenden Flansch 12. An den Rohrstutzen kann beispielsweise eine hier nicht dargestellte Rohrleitung angeschweißt sein oder auch ein Rohrbogen, ein Reduzierstück, ein T-Stück, eine Muffe oder dergleichen. Die weitere Fortsetzung der Rohrleitung im axialen Anschluss an den Rohrstutzen 11 des Bauteils 10 ist im Rahmen der vorliegenden Erfindung nicht entscheidend und lässt viele Varianten zu. Es handelt sich lediglich bei dem in Figur 1 dargestellten Bauteil 10 um ein solches, welches einen Rohrabschnitt 11 und einen mit diesem Rohrabschnitt (in der Regel einstückig) verbundenen Flansch 12 aufweist.

Die vorstehenden Ausführungen gelten analog auch für das zweite Bauteil 13 in Figur 1, welches ebenfalls einen Rohrstutzen 14 oder Rohrabschnitt aufweist sowie einen mit diesem Rohrstutzen 14 verbundenen Flansch 15. Der Übergang vom Flansch 15 zum Rohrstutzen 14 im radial äußeren Bereich kann konisch verlaufen wie in der Zeichnung oder bogenförmig abgerundet oder auch winkelförmig-dies ist im Rahmen der vorliegenden Erfindung unkritisch. Hier sind vielfältige Gestaltungsvarianten denkbar. Auch auf die in den Zeichnungen verwendeten Materialstärken kommt es nicht an-diese sind nur beispielhaft zu verstehen.

Die Abmessungen von Flansch und Rohrstutzen sind ebenfalls nahezu beliebig wählbar, natürlich im Rahmen der für die jeweilige Rohrleitung geltenden Normen, wobei die vorliegende Erfindung jedoch besonders vorteilhaft anwendbar ist bei groß dimensionierten Rohrleitungsbauteilen, denn bei diesen ist es bislang vor Ort besonders schwierig eine dichte und druckbelastbare Verbindung allein durch einen Schweißvorgang herzustellen.

In Figur 1 ist angedeutet, dass an den Rohrstutzen 14 eine sich in axialer Verlängerung anschließende Rohrleitung 20 angebracht ist, die bevorzugt werkseitig an den Rohrstutzen angeschweißt wird. Es kann aber auch direkt ein erfindungsgemäßes Bauteil mit sich anschließender Rohrleitung oder einem anderen Rohrleitungsbauteil in einem Stück durch ein kunststofftechnisches Verfahren wie zum Beispiel im Spritzguss hergestellt werden. Da die genaue Form des sich axial anschließenden Bereichs 20 quasi beliebig wählbar ist, wird an dieser Stelle hierauf nicht näher eingegangen.

Wie in Figur 1 erkennbar, sind die beiden Flansche 12, 15 der beiden Bauteile 10, 13 über eine achsparallele in der Regel mehrfache Schraubverbindung 16 mit Schrauben und Muttern miteinander verbunden, so dass durch Anziehen der Schraubverbindung 16 beide Bauteile 10, 13 gegeneinander verspannt werden können. Durch diese Schraubverbindung 16 wird eine mechanische Verbindung der beiden Bauteile 10, 13 geschaffen, die eine erste Verbindung darstellt und beispielsweise Zugkräfte aufnimmt, die auf die Verbindung der Bauteile einwirken. Anzahl und Größe der verwendeten Schrauben ist beliebig, wobei es im Falle von ringförmigen Flanschen 12, 15 wie in dem Ausführungsbeispiel von Figur 1 vorteilhaft sein kann, mehrere Schraubverbindungen 16 mit regelmäßigen Abständen über den Umfang verteilt anzuordnen.

Gemäß der vorliegenden Erfindung besteht nun zusätzlich zu der Schraubverbindung 16 zwischen den beiden Bauteilen 10, 13 eine Schweißverbindung. Dabei sind die beiden Bauteile in dem Ausführungsbeispiel gemäß Figur 1 im Bereich einander zugewandter und aneinander liegender Stirnflächen der Flansche 12, 15 miteinander durch Verschweißen stoffschlüssig verbunden. Diese Schweißverbindung 21, die im Bereich einer ringförmigen Berührungsfläche beider Bauteile 10, 13 hergestellt wurde, ist in Figur 1 nur schematisch angedeutet.

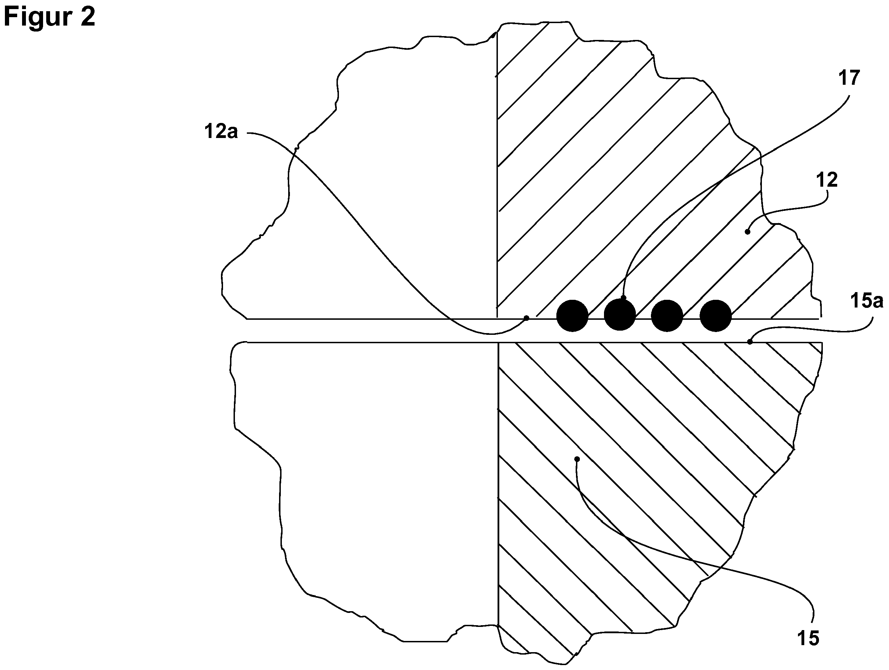

Nähere Details ergeben sich aus der vergrößerten Detaildarstellung eines Ausschnitts gemäß Figur 2, auf die nachfolgend Bezug genommen wird. Man sieht in Figur 2 Ausschnitte aus den Bauteilen 10, 13 jeweils im Bereich ihrer Flansche, wobei hier die jeweils einander zugewandten innenseitig liegenden Stirnflächen 12 a bzw. 15 a erkennbar sind. Bei diesen Stirnflächen 12 a, 15 a handelt es sich um die ringförmigen Flächen, in deren Bereich die beiden Bauteile miteinander verschweißt werden. Dazu benutzt man das Elektroschweißverfahren unter Verwendung von Heizwendeln 17, die im Bereich der Stirnflächen 12 a, 15 a angeordnet werden. Diese Heizwendeln 17 bestehen aus einem leitenden Metall wie zum Beispiel Kupfer und werden durch hindurchleiten von Strom erwärmt, so dass der Kunststoff im Bereich der miteinander zu verschweißenden Stirnflächen 12 a, 15 a aufschmilzt und eine stoffschlüssige Verbindung hergestellt wird. Diese stoffschlüssige Schweißverbindung hat den Vorteil einer hohen Dichtigkeit und im Gegensatz zu einer herkömmlichen Dichtung ist sie dauerhaft beständig und unterliegt keinem Verschleiß.

Die Figuren 3 a und 3 b zeigen noch einmal in zwei unterschiedlichen Perspektiven jeweils Ansichten eines einzelnen Bauteils vom Typ wie das zuvor beschriebene erste Bauteil 10 und das zweite Bauteil 13, welche in einer erfindungsgemäßen Flanschverbindung, wie sie in Figur 1 dargestellt ist, miteinander sowohl durch Verschweißen als auch durch Verschrauben verbunden werden. In Figur 3 b erkennt man gut den Rohrstutzen 11, an den eine weitere Rohrleitung angebunden, insbesondere angeschweißt wird sowie auch den mit diesem Rohrstutzen 11 verbundenen ringförmigen Flansch 12, in der Fachsprache spricht man auch von einem Flanschblatt. In Figur 3 a erkennt man die ringförmige Stirnfläche 12 a, in der die beispielsweise in konzentrischen Kreisen verlegte drahtförmige Heizwendel 17 angeordnet ist, in dem Beispiel nur im Bereich einer radial inneren ringförmigen Teilfläche der Stirnfläche 12 a. Weiterhin sieht man die in Abständen über den Umfang verteilt angeordneten Bohrungen 16 a für die Schraubverbindung.

Nachfolgend wird unter Bezugnahme auf die Figuren 4 und 5 eine Flanschverbindung gemäß einer alternativen Variante der vorliegenden Erfindung näher erläutert. In Figur 4 ist wiederum ein schematisch vereinfachter Längsschnitt durch einen Teil einer erfindungsgemäßen Flanschverbindung dargestellt, welche zwei Bauteile 10, 13 umfasst, die mittels Verschraubung und Verschweißen miteinander zu verbinden sind, ähnlich wie bereits zuvor unter Bezugnahme auf das Ausführungsbeispiel von Figur 1 beschrieben wurde. Der Unterschied bei der Variante von Figur 4 liegt darin, dass die beiden Bauteile 10, 13 in dem stirnseitigen Flanschbereich, in dem die Verbindung erfolgt, so geformt sind, dass sich eine Nut-Feder-Verbindung ergibt. Dazu weist das erste (in der Zeichnung linke) Bauteil 10 in seinem stirnseitigen Endbereich eine ringförmige umlaufende Nut 10 a, d.h. einen Rücksprung, auf und das zweite Bauteil 13 weist in seinem stirnseitigen Endbereich eine entsprechend dimensionierte ringförmig umlaufende Feder 13 a, d.h. einen Vorsprung, auf, so dass bei Zusammenschieben der beiden Bauteile 10, 13 in axialer Richtung die Nut 10 a und die Feder 13 a ineinander greifen. Im Bereich von Nut und Feder, also in dem stirnseitigen Bereich, in dem sich die stirnseitigen Flächen der beiden Bauteile 10, 13 bei deren Zusammenschieben berühren, ist mindestens eine Heizwendel 17 angeordnet, so dass hier ein elektrisches Verschweißen durch Aufschmelzen des Kunststoffs erfolgen kann.

In den Figuren 5 a bis 5 d sind im vergrößerten Maßstab vier beispielhafte verschiedene Varianten dargestellt für die Anordnung von Heizwendeln 17 im Verbindungsbereich der Nut-und Feder-Verbindung. Demnach kann eine Heizwendel 17 im Bereich einer stirnseitigen ringförmigen Endfläche einer Nut 10 a oder eines Rücksprungs angeordnet sein wie dies in Figur 5 b dargestellt ist, oder im Bereich einer stirnseitigen ringförmigen Endfläche einer Feder 13 a oder eines Vorsprungs gemäß der Darstellung von Figur 5 d. Weitere Möglichkeiten sind beispielsweise die Anordnung im Bereich einer ringförmigen inneren Umfangsfläche einer Nut 10 a wie in der Darstellung gemäß Figur 5 a oder im Bereich einer ringförmigen äußeren Umfangsfläche einer Feder 13 a oder eines Vorsprungs wie in der Darstellung gemäß Figur 5 c. Es können auch mehrere Heizwendeln 17 vorgesehen sein, zum Beispiel Kombinationen der Varianten gemäß den Figuren 5 a und 5 b oder auch Kombinationen der Varianten gemäß den Figuren 5 c und 5 d, so dass dann jeweils zwei Heizwendeln in verschiedenen für die Verschweißung relevanten Flächen der zu verbindenden Bauteile vorhanden sind.

Nachfolgend wird unter Bezugnahme auf die Figuren 6 bis 8 eine weitere alternative Variante einer erfindungsgemäßen Flanschverbindung näher beschrieben. In Figur 6 ist im Längsschnitt eine Variante gezeigt, bei der die Bauteile teilweise aus unterschiedlichen für ein Verschweißen nicht kompatiblen Werkstoffen bestehen. Das erste Bauteil 10 besteht hier beispielsweise aus Polyethylen und das zweite Bauteil 13 besteht hauptsächlich aus Polyamid, nämlich in dem tragenden Bereich, der in Figur 6 mit 136 bezeichnet ist. Lediglich Teilbereiche an der Oberfläche des Bauteils 13 weisen eine Beschichtung 139 oder Umhüllung aus Polyethylen auf, so dass in diesen Oberflächenbereichen der gleiche Werkstoff Polyethylen vorliegt, aus dem auch das erste Bauteil 10 besteht. Damit sind im stirnseitigen Bereich des Bauteils 13, der auch mit dem Polyethylen 139 beschichtet ist Flächen gegeben, die sich mit dem Bauteil 10 verschweißen lassen, denn hier sind die jeweiligen Werkstoffe identisch. Im Bereich der Stirnseite des Bauteils 13 sind wie auch in den zuvor beschriebenen Ausführungsbeispielen Heizwendel 17 angeordnet, um die stirnseitige Fläche für den Schweißvorgang aufzuschmelzen.

Figur 7 zeigt noch einmal in vergrößertem Maßstab einen Ausschnitt VII im stirnseitigen Bereich des zweiten Bauteils 13, so dass man dort die Heizwendel 17 erkennen kann. Durch diese Heizwendel wird der Werkstoff der Beschichtung 139 erwärmt und aufgeschmolzen.

Dieser Werkstoff ist kompatibel mit demjenigen des Bauteils 10, so dass im Bereich der einander zugewandten Stirnseiten der beiden Bauteile 10, 13 eine Verschweißung erfolgen kann.

Figur 8 zeigt in vergrößertem Maßstab einen Detailausschnitt aus der Darstellung gemäß Figur 6 im Bereich einer radial inneren Umfangsfläche des zylindrischen Bauteils 13, wo das ansonsten aus Polyamid 136 bestehende Bauteil 13 wiederum mit Polyethylen 139 beschichtet ist. Diese Ansicht zeigt, dass sich zwischen dem aus Polyamid 136 bestehenden Bereich und der Beschichtung 139 aus Polyethylen eine Grenzfläche ergibt. Hier muss man beim Beschichten die Tatsache in Betracht ziehen, dass die Materialien PE einerseits und PA andererseits nicht kompatible Werkstoffe sind, so dass es ähnlich wie bei einer Schweißverbindung auch beim Beschichten schwierig wäre, eine stoffschlüssige Verbindung zwischen den unterschiedlichen Kunststoffen zu erhalten. Dies kann man jedoch dadurch lösen, dass man im Bereich der Grenzfläche einen Haftvermittler 138 aufbringt, so dass dann beide Kunststoffe 136, 139 bei der Herstellung des Bauteils eine stoffschlüssige Verbindung eingehen. Eine Flanschverbindung gemäß Figur 6 hat den Vorteil, dass man nun in dem hinteren Bereich (der Flanschverbindung abgewandt) bei dem Bauteil 13 einen Bereich 136 hat, der nur aus Polyamid besteht, wie Figur 6 zeigt, besteht dort keine Beschichtung, so dass man an den Rohrstutzen des Bauteils 13 ohne weiteres in axialer Verlängerung ein Rohr 140, einen Rohrbogen oder eine Armatur aus Polyamid anschließen kann. Auf der anderen Seite der Flanschverbindung hat man hingegen an dem Bauteil einen Rohrstutzen aus Polyethylen, so dass man dort in axialer Verlängerung ein weiteres Rohr 110, einen Rohrbogen etc. aus Polyethylen anschweißen kann. Die erfindungsgemäße Flanschverbindung fungiert in diesem Fall als eine Art Adapter als Rohrbaueinheit in einer Rohrleitung, die in den beidseitig jeweils angebundenen Bereichen aus verschiedenen Kunststoffen wie in dem Beispiel aus Polyethylen einerseits und Polyamid andererseits bestehen.

### Bezugszeichenliste

10 erstes Bauteil
10 a Nut
11 erster Rohrabschnitt/Rohrstutzen
110 sich anschließendes Rohr aus Polyethylen
12 erster Flansch
12 a Stirnfläche
13 zweites Bauteil
13 a Feder
136 tragender Bereich aus Polyamid
138 Haftvermittler
139 Beschichtung aus Polyethylen
14 zweiter Rohrabschnitt
140 sich anschließendes Rohr aus Polyamid
15 zweiter Flansch
15 a Stirnfläche
16 mechanische Verbindung/Schraubverbindung
16 a Bohrungen
17 Mittel zum elektrischen Verschweißen/Heizwendel
20 axial verlängernde Rohrleitung
21 Schweißverbindung

## Patentansprüche

1. Flanschverbindung für Bauteile aus Kunststoff, insbesondere für rohrförmige Bauteile aus Kunststoff, umfassend wenigstens ein erstes Bauteil (10) mit einem ersten Rohrabschnitt (11) und einem ersten Flansch (12) sowie wenigstens ein zweites Bauteil (13) mit einem zweiten Rohrabschnitt (14) und einem zweiten Flansch (15), wobei der erste Flansch (12) und der zweite Flansch (15) mittels wenigstens einer mechanischen Verbindung (16) in axialer Richtung gegeneinander verspannbar sind,
wobei zusätzlich zu der mechanischen Verbindung (16) im Bereich aneinander liegender Stirnflächen der beiden Bauteile (10, 13) Mittel (17) zum Verbinden der Bauteile (10, 13) durch elektrisches Verschweißen vorgesehen sind, wobei als Mittel zum elektrischen Verschweißen in wenigstens einem Teilbereich einer der Stirnflächen wenigstens eines der beiden Bauteile (10, 13) wenigstens eine Heizwendel (17) angeordnet ist und die beiden einander zugewandten Stirnflächen (12 a, 15 a) der beiden Bauteile (10, 13) unmittelbar ohne Zwischenschaltung weiterer Bauelemente miteinander verschweißt werden, **dadurch gekennzeichnet, dass** die Bauteile (10, 13) in Teilbereichen, die nicht miteinander verschweißt werden, aus unterschiedlichen, schweißtechnisch nicht miteinander kompatiblen Werkstoffen bestehen.

2. Flanschverbindung nach Anspruch 1, **dadurch gekennzeichnet, dass** die mechanische Verbindung (16) eine Flanschverschraubung umfasst oder eine klemmende Verbindung über Bügel, Klemmen, Klammern oder Zwingen.

3. Flanschverbindung nach Anspruch 1 oder 2, **dadurch gekennzeichnet, dass** die wenigstens eine Heizwendel (17) wenigstens teilweise in den Kunststoff im Bereich der Stirnfläche eines der beiden Bauteile eingebettet ist.

4. Flanschverbindung nach einem der Ansprüche 1 bis 3, **dadurch gekennzeichnet, dass** im Bereich der stirnseitigen Enden der miteinander zu verbindenden Bauteile (10, 13) wenigstens eine Nut- und Feder-Verbindung (10 a, 13 a) vorgesehen ist.

5. Flanschverbindung nach Anspruch 4, **dadurch gekennzeichnet, dass** wenigstens eine Heizwendel (17) an wenigstens einem der miteinander zu verbindenden Bauteile (10, 13) im Bereich der Nut- und Feder-Verbindung (10 a, 13 a) angeordnet ist.

6. Flanschverbindung nach einem der Ansprüche 4 oder 5, **dadurch gekennzeichnet, dass** wenigstens eine Heizwendel (17) im Bereich einer stirnseitigen ringförmigen Endfläche einer Nut (10 a) oder eines Rücksprungs oder einer stirnseitigen ringförmigen Endfläche einer Feder (13 a) oder eines Vorsprungs oder im Bereich einer ringförmigen inneren Umfangsfläche einer Nut (10 a) oder eines Rücksprungs oder im Bereich einer ringförmigen äußeren Umfangsfläche einer Feder (13 a) oder eines Vorsprungs angeordnet ist.

7. Flanschverbindung nach einem der Ansprüche 3 bis 6, **dadurch gekennzeichnet, dass** wenigstens eine Einrichtung zur Messung des elektrischen Widerstands im Bereich einer Heizwendel (17) vorgesehen ist sowie gegebenenfalls ein Alarmgeber bei Messung einer Änderung des elektrischen Widerstands.

8. Flanschverbindung nach einem der Ansprüche 3 bis 7, **dadurch gekennzeichnet, dass** wenigstens eine Heizwendel (17) zur Prüfung der Qualität der Schweißverbindung nach dem Schweißvorgang verwendet wird, insbesondere mittels Ultraschall, Röntgenstrahlung oder dergleichen.

9. Flanschverbindung nach einem der Ansprüche 1 bis 8, **dadurch gekennzeichnet, dass** wenigstens eines der Bauteile (10, 13) einen geraden Rohrleitungsabschnitt umfasst oder wenigstens eines der Bauteile (10, 13) einen Rohrbogen, ein T-Stück, ein Abzweigstück, ein Reduzierstück oder eine Muffe umfasst.

10. Verfahren zur Erstellung einer Flanschverbindung zwischen mindestens zwei Bauteilen aus Kunststoff, insbesondere zwischen rohrförmigen Bauteilen aus Kunststoff, bei dem man wenigstens ein erstes Bauteil (10) mit einem ersten Rohrabschnitt (11) und einem ersten Flansch (12) mit wenigstens einem zweiten Bauteil (13) mit einem zweiten Rohrabschnitt (14) und einem zweiten Flansch (15) miteinander verbindet, wobei der erste Flansch (12) und der zweite Flansch (15) mittels wenigstens einer mechanischen Verbindung (16) in axialer Richtung gegeneinander verspannt werden,
wobei zusätzlich zu dieser mechanischen Verbindung (16) die beiden Bauteile (10, 13) im Bereich aneinander liegender Stirnflächen auch elektrisch verschweißt werden, wobei als Mittel zum elektrischen Verschweißen in wenigstens einem Teilbereich einer der Stirnflächen wenigstens eines der beiden Bauteile (10, 13) wenigstens eine Heizwendel (17) angeordnet ist und die beiden einander zugewandten Stirnflächen (12 a, 15 a) der beiden Bauteile (10, 13) unmittelbar ohne Zwischenschaltung weiterer Bauelemente miteinander verschweißt werden, **dadurch gekennzeichnet dass** die Bauteile (10, 13) in Teilbereichen, die nicht miteinander verschweißt werden, aus unterschiedlichen, schweißtechnisch nicht miteinander kompatiblen Werkstoffen bestehen.

## Claims

1. A flange connection for plastics components, in particular for tubular plastics components, comprising at least a first component (10) with a first tubular portion (11) and a first flange (12) and also at least a second component (13) with a second tubular portion (14) and a second flange (15), wherein the first flange (12) and the second flange (15) can be tensioned in respect of one another in an axial direction by means of at least one mechanical connection (16),
wherein in addition to the mechanical connection (16) in the region of adjacent end faces of the two components (10, 13), means (17) for connecting the components (10, 13) by electric welding are provided, wherein at least one heating coil (17) as a means for electric welding is arranged in at least a partial region of one of the end faces of at least one of the two components (10, 13) and the two end faces (12 a, 15 a) of the two components (10, 13) facing one another are welded to one another directly without inserting additional structural elements, **characterized in that**
the components (10, 13) in partial regions which are not welded to one another are made of different materials which are not compatible with one another in welding terms.

2. The flange connection according to claim 1, **characterized in that** the mechanical connection (16) comprises a flange screw connection or a clamping connection via brackets, clamps, clips or ferrules.

3. The flange connection according to claim 1 or 2, **characterized in that** the at least one heating coil (17) is embedded at least partially in the plastic in the region of the end face of one of the two components.

4. The flange connection according to claims 1 to 3, **characterized in that** at least one tongue-and-groove connection (10 a, 13 a) is provided in the region of the face ends of the components (10, 13) connected to one another.

5. The flange connection according to claim 4, **characterized in that** at least one heating coil (17) is arranged on at least one of the components (10, 13) to be connected to one another in the region of the tongue-and-groove connection (10 a, 13 a).

6. The flange connection according to one of claims 4 or 5, **characterized in that** at least one heating coil (17) is arranged in the region of an annular end surface on the face side of a groove (10a) or a recess or an annular end surface on the face side of a spring (13 a) or a projection or in the region of an annular inner circumferential surface of a groove (10 a) or a recess or in the region of an annular outer circumferential surface of a spring (13 a) or a projection.

7. The flange connection according to one of claims 3 to 6, **characterized in that** at least one mechanism for measuring electrical resistance in the region of a heating coil (17) is provided and also possibly an alarm generator when measuring a change in the electrical resistance.

8. The flange connection according to one of claims 3 to 7, **characterized in that** at least one heating coil (17) is used to test the quality of the weld connection following the welding process, in particular by means of ultrasound, X-ray radiation or the like.

9. The flange connection according to one of claims 1 to 8, **characterized in that** at least one of the components (10, 13) comprises a straight pipe section or at least one of the components (10, 13) comprises a pipe bend, a T-piece, a branch piece, a reducing piece or a collar.

10. A method for creating a flange connection between at least two plastics components, in particular between tubular plastics components, in which at least a first component (10) with a first tubular portion (11) and a first flange (12) and at least a second component (13) with a second tubular portion (14) and a second flange (15) are connected to one another, wherein the first flange (12) and the second flange (15) are tensioned in respect of one another in an axial direction by means of at least one mechanical connection (16), wherein in addition to this mechanical connection (16) the two components (10, 13) are also electrically welded in the region of adjacent front end faces, wherein at least one heating coil (17) as a means for electric welding is arranged in at least a partial region of one of the face ends of at least one of the two components (10, 13) and the two end faces (12 a, 15 a) of the two components (10, 13) facing one another are welded to one another directly without inserting additional structural elements, **characterized in that** the components (10, 13) in partial regions which are welded together are made of different materials which are not compatible with one another in welding terms.

## Revendications

1. Raccord à brides pour éléments en matière plastique, en particulier pour éléments tubulaires en matière plastique, comprenant au moins un premier élément (10) avec une première partie tubulaire (11) et une première bride (12) ainsi qu'au moins un deuxième élément (13) avec une deuxième partie tubulaire (14) et une deuxième bride (15), dans lequel la première bride (12) et la deuxième bride (15) peuvent être mises en tension l'une par rapport à l'autre en direction axiale au moyen d'au moins une liaison mécanique (16),
dans lequel, en plus de la liaison mécanique (16), on prévoit, dans la zone de surfaces frontales reposant l'une contre l'autre des deux éléments (10, 13), des moyens (17) pour la liaison des éléments (10, 13) par soudage électrique,
dans lequel, en tant que moyens pour le soudage électrique, dans au moins une zone partielle de l'une des surfaces frontales d'au moins l'un des deux éléments (10, 13) au moins un enroulement chauffant (17) est disposé, et les deux surfaces frontales (12a, 15a) tournées l'une vers l'autre des deux éléments (10, 13) étant soudés ensemble de manière directe, sans intercaler d'autres éléments,
**caractérisé en ce que**, dans des zones partielles qui ne sont pas soudées ensemble, les éléments (10, 13) se composent de matériaux différents non compatibles entre eux du point de vue de la technologie de soudage.

2. Raccord à brides selon la revendication 1, **caractérisé en ce que** la liaison mécanique (16) comprend un assemblage par brides boulonnées ou une liaison par serrage via des étriers, pinces, agrafes ou colliers de serrage.

3. Raccord à brides selon la revendication 1 ou 2, **caractérisé en ce que** l'au moins un enroulement chauffant (17) est au moins partiellement noyé dans la matière plastique dans la zone de la surface frontale de l'un des deux éléments.

4. Raccord à brides selon l'une des revendications 1 à 3, **caractérisé en ce que**, dans la zone des extrémités côté frontal des éléments (10, 13) à relier ensemble, on prévoit au moins un assemblage par rainure et languette (10a, 13a).

5. Raccord à brides selon la revendication 4, **caractérisé en ce qu'**au moins un enroulement chauffant (17) est disposé au niveau d'au moins l'un des éléments (10, 13) à relier ensemble dans la zone de l'assemblage par rainure et languette (10a, 13a).

6. Raccord à bride selon l'une des revendications 4 ou 5, **caractérisé en ce qu'**au moins un enroulement chauffant (17) est disposé dans la zone d'une surface d'extrémité annulaire frontale d'une rainure (10a) ou d'un emboîtement ou d'une surface d'extrémité annulaire côté frontal d'une languette (13a) ou d'un bossage, ou dans la zone d'une surface périphérique intérieure annulaire d'une rainure (10a) ou d'un emboîtement, ou dans la zone d'une surface périphérique extérieure annulaire d'une languette (13a) ou d'un bossage.

7. Raccord à brides selon l'une des revendications 3 à 6, **caractérisé en ce qu'**au moins un dispositif pour la mesure de la résistance électrique dans la zone d'un enroulement chauffant (17) est prévu, ainsi qu'un générateur d'alarme le cas échéant lors de la mesure d'une variation de la résistance électrique.

8. Raccord à brides selon l'une des revendications 3 à 7, **caractérisé en ce qu'**au moins un enroulement chauffant (17) est utilisé pour le contrôle de la qualité de la soudure après le processus de soudage, en particulier au moyen d'ultrasons, de rayons X, ou similaires.

9. Raccord à brides selon l'une des revendications 1 à 8, **caractérisé en ce qu'**au moins l'un des éléments (10, 13) comprend une partie de tuyauterie rectiligne ou qu'au moins l'un des éléments (10, 13) comprend un coude, une pièce en T, une pièce d'embranchement, un réducteur, ou un manchon.

10. Procédé pour réaliser un raccord à brides entre au moins deux éléments en matière plastique, en particulier entre des éléments tubulaires en matière plastique, où l'on relie ensemble au moins un premier éléments (10) avec une première partie tubulaire (11) et une première bride (12), et au moins un deuxième élément (13) avec une deuxième partie tubulaire (14) et une deuxième bride (15), dans lequel la première bride (12) et la deuxième bride (15) sont mises en tension l'une par rapport à l'autre en direction axiale au moyen d'au moins une liaison mécanique (16), dans lequel, en plus de cette liaison mécanique (16), les deux éléments (10, 13) sont également soudés électriquement dans la zone de surfaces frontales reposant l'une contre l'autre,
dans lequel, en guise de moyens pour le soudage électrique, dans au moins une zone partielle de l'une des surfaces frontales d'au moins l'un des deux éléments (10, 13) au moins un enroulement chauffant (17) est disposé, et les deux surfaces frontales (12a, 15a) tournées l'une vers l'autre des deux éléments (10, 13) sont soudées ensemble de manière directe, sans intercaler d'autres éléments,
**caractérisé en ce que**, dans des zones partielles qui ne sont pas soudées ensemble, les éléments (10, 13) se composent de matériaux différents, non compatibles entre eux du point de vue de la technologie de soudage.
